# EUROPEAN PATENT APPLICATION

(11) **EP 4 691 777 A1**
(43) Date of publication of application: **11.02.2026**
(21) Application number: 23956653.2
(22) Date of filing: 08.12.2023
(51) Int. Cl.: B41F 13/10

(54) **PLATE ROLLER APPARATUS OF PRINTING DEVICE**

(30) Priority: 27.10.2023 CN 202311405632
(71) Applicant: Zhejiang Weigang Technology Co., Ltd, Wenzhou, Zhejiang 325200 (CN)
(72) Inventor: YU, Jinhua, Wenzhou, Zhejiang 325200 (CN); REN, Fengjie, Wenzhou, Zhejiang 325200 (CN); CHEN, Kun, Wenzhou, Zhejiang 325200 (CN); CHE, Wenchun, Wenzhou, Zhejiang 325200 (CN); DING, Xuewei, Wenzhou, Zhejiang 325200 (CN); WU, Yuekun, Wenzhou, Zhejiang 325200 (CN); TENG, Junping, Wenzhou, Zhejiang 325200 (CN)
(74) Representative: Bayramoglu et al.
(86) International application number: PCT/CN2023/137376
(87) International publication number: WO 2025/086417

(57) **Abstract**

The present disclosure provides a plate cylinder apparatus of a printing device, where a cylinder abutment limiting part of a cylinder fixing mechanism is located on a cylinder shaft; the cylinder abutment limiting part is an outer frustoconical limiting surface; a cylinder retaining component is connected to the cylinder shaft; an inner ring of a retaining sleeve of the cylinder retaining component is sleeved on the cylinder shaft; and the retaining sleeve is provided with an outer frustoconical cylinder-retaining surface. The present disclosure can realize fixed assembly of the cylinder on the cylinder shaft, and is convenient for disassembly and assembly. The cylinder is sleeved, with the rear end limited by the cylinder abutment limiting part, and the front end retained by the retaining sleeve. Moreover, a centerline of the cylinder in assembly can be adjusted to be relatively centered, thereby ensuring concentricity between the cylinder and the cylinder shaft, and preventing the problem that the printing quality is affected by excessive deviation of the concentricity. The end of the retaining sleeve is separated into a plurality of deformable elastic unit claws. When the retaining sleeve axially retains the cylinder, the retaining sleeve can also clamp the cylinder shaft through deformation of the elastic unit claws, such that the cylinder is fixed more firmly and is not loosened easily.

## Description

### TECHNICAL FIELD

The present disclosure relates to printing devices, and in particular to a plate cylinder apparatus.

### BACKGROUND TECHNOLOGY

For a plate cylinder apparatus in a printing device such as an offset printing mechanism, the cylinder shaft and the cylinder may be either integrally formed or split and sleeved. In a split and sleeved structure, the cylinder is sleeved on the cylinder shaft when assembled.

This structure is typically achieved by two methods. In one method, after the cylinder is sleeved on the cylinder shaft, relative positions between the cylinder and the cylinder shaft are fixed by relevant locking components. In the other method, an inner ring (deformable) of the cylinder is expanded by air in an air passage of the cylinder shaft, such that the cylinder can be sleeved on the cylinder shaft. Then, the air is cut off, such that the inner ring of the cylinder contracts to clamp the cylinder shaft, thereby keeping relative positions between the cylinder and the cylinder shaft fixed. However, the structure for sleeving the cylinder on the cylinder shaft is relatively complex, and its stability, firmness, and concentricity all must be ensured. In addition, the printing device typically supports only one method, and cannot support the above two methods at the same time for assembly.

### SUMMARY OF THE INVENTION

### Technical problem

A technical problem to be solved by the present disclosure is to provide a plate cylinder apparatus of a printing device, to facilitate mounting of the cylinder on the cylinder shaft.

### Technical solutions

To solve the above technical problem, the present disclosure employs the following technical solutions: A plate cylinder apparatus of a printing device includes a cylinder fixing mechanism and a cylinder shaft configured to allow a cylinder to be sleeved on, where the cylinder fixing mechanism includes a cylinder abutment limiting part and a cylinder retaining component; the cylinder abutment limiting part is located on the cylinder shaft; the cylinder abutment limiting part is an outer frustoconical limiting surface; the cylinder retaining component is disposed on and connected to the cylinder shaft; the cylinder retaining component includes a retaining sleeve; an inner ring of the retaining sleeve is sleeved on the cylinder shaft; the retaining sleeve is provided with an outer frustoconical cylinder-retaining surface; the cylinder retaining component is disposed in front of the cylinder abutment limiting part; the cylinder shaft is provided with a cylinder mounting position; and the cylinder mounting position is disposed between the cylinder retaining component and the cylinder abutment limiting part.

The following various optimizations or supplementary explanations may further be made on the basis of the above technical solution.

For example, a rear end of the cylinder abuts against the outer frustoconical limiting surface; the rear end of the cylinder is provided with a first inner frustoconical surface; the first inner frustoconical surface corresponds to the outer frustoconical limiting surface; a front end of the cylinder is provided with a second inner frustoconical surface; and the outer frustoconical cylinder-retaining surface corresponds to the second inner frustoconical surface; and
the rear end of the cylinder is further provided with a locating notch; a locating protrusion is further disposed at the outer frustoconical limiting surface; the locating protrusion matches with and corresponds to the locating notch; and the locating notch is located at an inner ring of the rear end of the cylinder.

Further, an annular deformation relief groove is further concentrically formed in the inner ring of the retaining sleeve; separation grooves are formed at an end of the retaining sleeve; the separation grooves separate the outer frustoconical cylinder-retaining surface into a plurality of unit surfaces; the separation grooves further separate the end of the retaining sleeve into a plurality of elastic unit claws; the plurality of unit surfaces are respectively located at outer sides of the plurality of elastic unit claws; and the plurality of elastic unit claws are arranged circumferentially.

For example, the separation grooves are arranged circumferentially on the retaining sleeve. The separation grooves are even arranged circumferentially and equidistantly.

In addition, the retaining sleeve is connected to an inner threaded hole; an external thread is disposed on the cylinder shaft; and the inner threaded hole is threaded with the external thread.

As a further optimization, the cylinder retaining component further includes a rotary connecting component; the retaining sleeve is connected to the rotary connecting component; the rotary connecting component is provided with an inner threaded hole; an external thread is disposed on the cylinder shaft; and the inner threaded hole is threaded with the external thread. The rotary connecting component and the retaining sleeve are integrally formed; or, the rotary connecting component and the retaining sleeve are split and are respectively provided with an inner annular hook and an outer annular hook that are connected to each other.

In an implementation, the cylinder includes a plate cylinder; and the plate cylinder is sleeved on the cylinder shaft.

In another implementation, the cylinder includes a bridge cylinder; the bridge cylinder is sleeved on the cylinder shaft; a plate cylinder is sleeved on the bridge cylinder; an air passage is provided in the cylinder shaft; an air outlet is formed in a circumferential surface of the cylinder shaft; the air outlet communicates with the air passage; a via hole communicating with the air outlet is formed in the bridge cylinder; the cylinder retaining component is located within an outer diameter range of a cylindrical surface of the bridge cylinder; an annular recess is formed in an inner hole of the bridge cylinder; and the via hole communicates with the air outlet through the annular recess. In addition, a sealing ring may further be disposed between each of two ends of the bridge cylinder and the cylinder shaft; or a sealing ring is disposed between a rear end of the bridge cylinder and the cylinder shaft, and sealing rings are respectively disposed between the retaining sleeve and the bridge cylinder, and between the retaining sleeve and the cylinder shaft.

### Beneficial effects

The present disclosure has the following beneficial effects: The present disclosure can realize fixed assembly of the cylinder on the cylinder shaft, and is convenient for disassembly and assembly. The cylinder is sleeved, with the rear end limited by the cylinder abutment limiting part, and the front end retained by the retaining sleeve. Moreover, a centerline of the cylinder in assembly can be adjusted to be relatively centered, thereby ensuring concentricity between the cylinder and the cylinder shaft, and preventing the problem that the printing quality is affected by excessive deviation of the concentricity. The end of the retaining sleeve is separated into a plurality of deformable elastic unit claws. When the retaining sleeve axially retains the cylinder, the retaining sleeve not only can firmly retain the cylinder, but also can clamp the cylinder shaft through deformation of the elastic unit claws, such that the cylinder is fixed more firmly and is not loosened easily. In addition, the present disclosure can further support two assembly methods for the cylinder. Therefore, the present disclosure has substantial features and progress over the prior art.

### DESCRIPTION OF THE DRAWINGS

Relevant details and working principles in implementations and embodiments of the present disclosure will be described below with reference to the accompanying drawings.

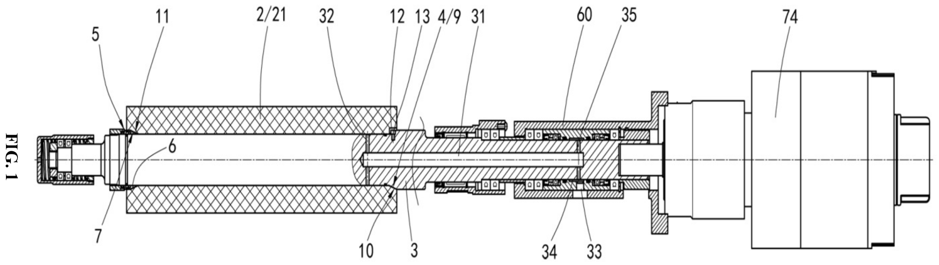

FIG. 1 is a schematic structural view according to Embodiment 1 of the present disclosure;

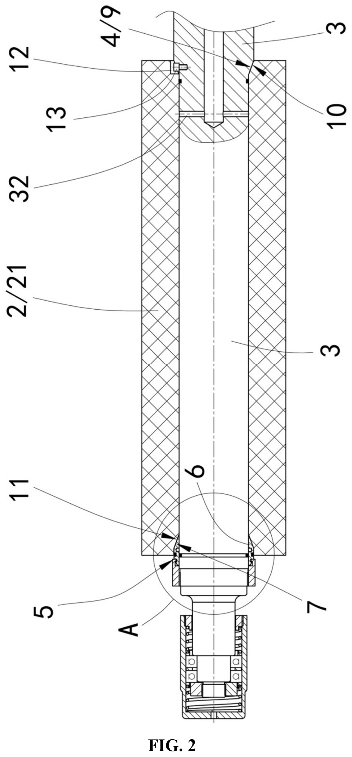

FIG. 2 is a partially schematic structural view of FIG. 1;

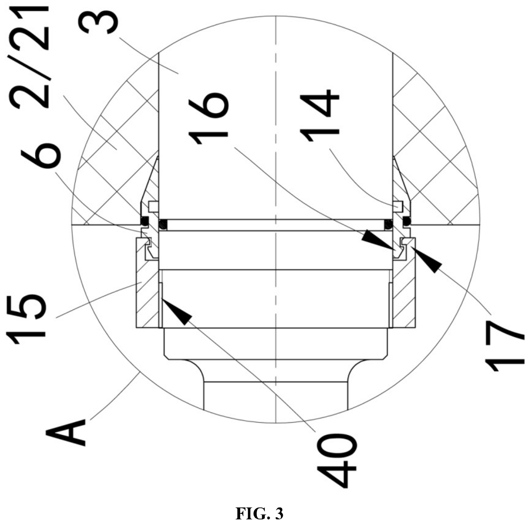

FIG. 3 is an enlarged view of A in FIG. 2;

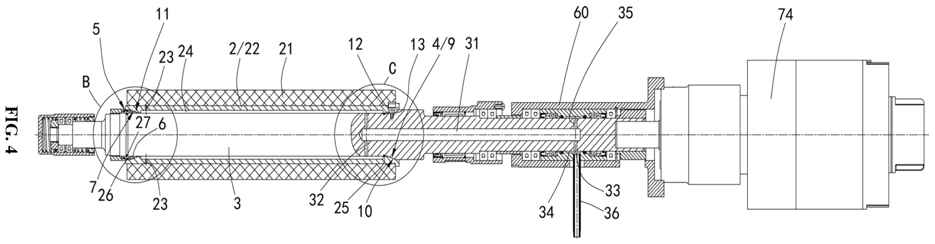

FIG. 4 is a schematic structural view according to Embodiment 2 of the present disclosure;

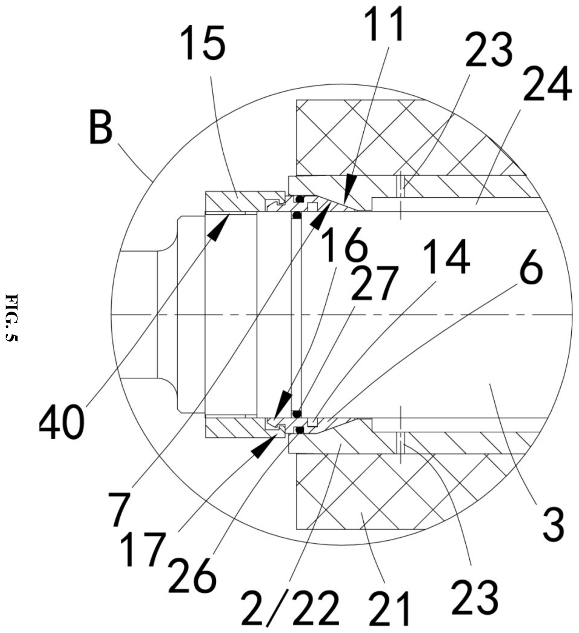

FIG. 5 is an enlarged view of B in FIG. 4;

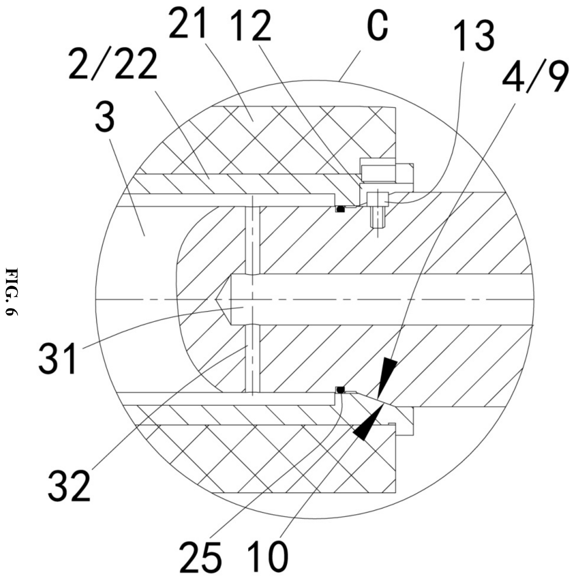

FIG. 6 is an enlarged view of C in FIG. 4;

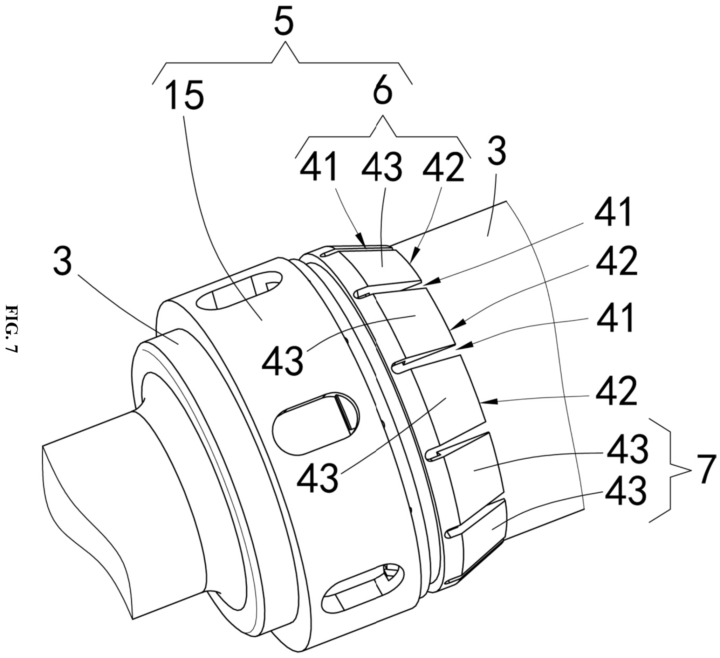

FIG. 7 is a schematic stereoscopic view in which a cylinder retaining component is disposed on a cylinder shaft;

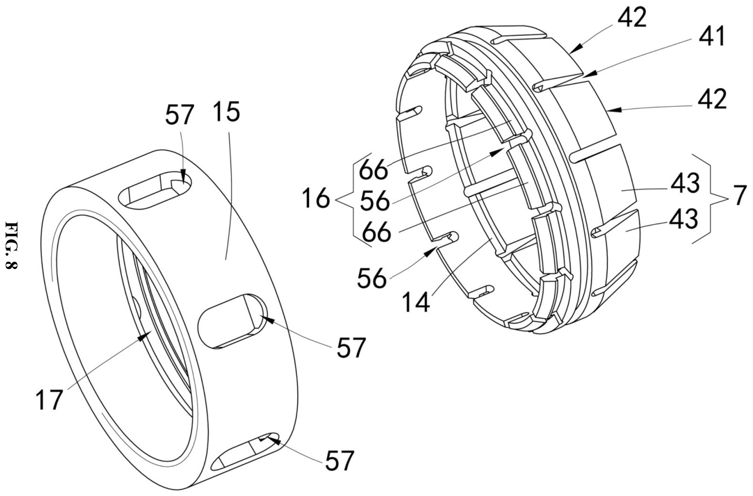

FIG. 8 is an exploded view in an embodiment of a cylinder retaining component; and

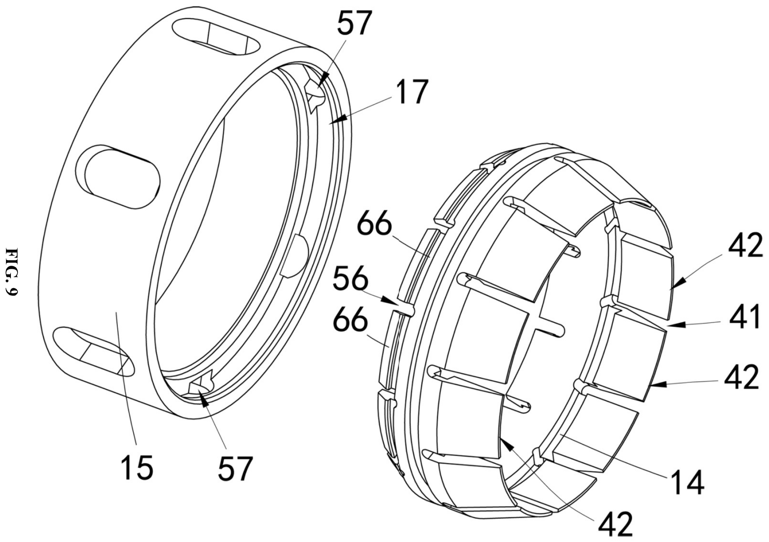

FIG. 9 is a schematic structural view of FIG. 8 from another perspective.

In the figures: 2: cylinder, 3: cylinder shaft, 4: cylinder abutment limiting part, 5: cylinder retaining component, 6: retaining sleeve, 7: outer frustoconical cylinder-retaining surface, 9: outer frustoconical limiting surface, 10: first inner frustoconical surface, 11: second inner frustoconical surface, 12: locating notch, 13: locating protrusion, 14: annular deformation relief groove, 15: rotary connecting component, 16: inner annular hook, 17: outer annular hook, 21: plate cylinder, 22: bridge cylinder, 23: via hole, 24: annular recess, 31: air passage, 32: air outlet, 33: air connecting hole, 34: air-intake annular groove, 35: air inlet, 36: air connecting tube, 41: separation groove, 42: elastic unit claw, and 43: unit surface.

### SPECIFIC IMPLEMENTATIONS

Referring to figures, a plate cylinder apparatus of a printing device in an embodiment includes a cylinder fixing mechanism and cylinder shaft 3. The cylinder shaft 3 is configured to allow cylinder 2 to be sleeved on. The cylinder 2 may be sleeved on the cylinder shaft 3. The cylinder shaft 3 typically rotates on support frame 60 (such as a support sleeve structure). The cylinder shaft 3 is driven by rotating drive motor 74 to rotate on the support frame 60.

The cylinder fixing mechanism includes cylinder abutment limiting part 4 and cylinder retaining component 5.

The cylinder abutment limiting part 4 is located on the cylinder shaft 3. The cylinder abutment limiting part 4 is outer frustoconical limiting surface 9. A rear end of the cylinder 2 may abut against the outer frustoconical limiting surface 9 for limiting. Moreover, the outer frustoconical limiting surface 9 on the cylinder shaft 3 can enable the cylinder 2 to be relatively centered, resulting in relatively good concentricity between the cylinder 2 and the cylinder shaft 3. The cylinder abutment limiting part 4 and the cylinder shaft 3 may be integrally formed, and may also be split and connected.

The cylinder retaining component 5 is disposed on and connected to the cylinder shaft 3. The cylinder retaining component 5 includes retaining sleeve 6. An inner ring of the retaining sleeve 6 is sleeved on the cylinder shaft 3. The retaining sleeve 6 is provided with outer frustoconical cylinder-retaining surface 7. The retaining sleeve 6 acts on a front end of the cylinder 2 through the outer frustoconical cylinder-retaining surface 7. With this component, the cylinder 2 is relatively centered, ensuring the concentricity between the cylinder 2 and the cylinder shaft 3. The cylinder 2 can further be retained by the retaining sleeve 6.

The cylinder retaining component 5 is disposed in front of the cylinder abutment limiting part 4. The cylinder shaft 3 is provided with a cylinder mounting position. The cylinder mounting position is disposed between the cylinder retaining component 5 and the cylinder abutment limiting part 4. The cylinder 2, after being mounted, will be located at the cylinder mounting position.

When the cylinder 2 is sleeved on the cylinder shaft 3, one end (the rear end) of the cylinder 2 abuts against the cylinder abutment limiting part 4 (the outer frustoconical limiting surface 9 on the cylinder shaft 3), such that the rear end of the cylinder 2 is limited and relatively centered. The other end (the front end) of the cylinder 2 is retained by the cylinder retaining component 5. The front end of the cylinder 2 is retained by the retaining sleeve 6. Through cooperation between the retaining sleeve 6 of the cylinder retaining component 5 and the cylinder abutment limiting part 4 (the outer frustoconical limiting surface 9 on the cylinder shaft 3), the cylinder 2 is fixed on the cylinder shaft 3, realizing fixed mounting between the cylinder 2 and the cylinder shaft 3. In disassembly, the cylinder retaining component 5 is moved back or removed, and then the cylinder 2 is taken down.

The plate cylinder apparatus of a printing device can realize fixed assembly of the cylinder 2 on the cylinder shaft 3, and is convenient for disassembly and assembly. The cylinder 2 is sleeved, with the rear end limited by the cylinder abutment limiting part 4, and the front end retained by the retaining sleeve 6. Moreover, a centerline of the cylinder 2 in assembly can be adjusted to be relatively centered, thereby ensuring the concentricity between the cylinder 2 and the cylinder shaft 3. The present disclosure has a relatively simple structure, and prevents the problem that the printing quality is affected by excessive deviation of the concentricity.

The following optimizations or further explanations may further be made on the basis of the above embodiment.

For example, the rear end of the cylinder 2 abuts against the outer frustoconical limiting surface 9. The rear end of the cylinder 2 is provided with first inner frustoconical surface 10. The first inner frustoconical surface 10 corresponds to the outer frustoconical limiting surface 9. The front end of the cylinder 2 is provided with second inner frustoconical surface 11. The outer frustoconical cylinder-retaining surface 7 corresponds to the second inner frustoconical surface 11. Through fitted connection between conical surfaces, the centering effect is adjusted well to ensure the concentricity between the cylinder 2 and the cylinder shaft 3, and the retaining sleeve 6 is firmer in the axial retaining process.

In addition, the rear end of the cylinder 2 is further provided with locating notch 12. Locating protrusion 13 is further disposed at the outer frustoconical limiting surface 9. The locating protrusion 13 matches with and corresponds to the locating notch 12. When the cylinder 2 is sleeved on the cylinder shaft 3, the locating notch 12 and the locating protrusion 13 are snap-fitted for location, such that a circumferential relative position of the cylinder 2 can be maintained at a preset position relative to the cylinder shaft 3. The locating protrusion 13 may be a bolt, and its manufacture is relatively convenient. The locating protrusion 13 may be directly disposed on the outer frustoconical limiting surface 9 of the cylinder shaft 3, reducing an axial length of the locating notch 12. The locating notch 12 is located at an inner ring of the rear end of the cylinder 2, so as not to affect the integrity of a cylindrical surface of the cylinder 2.

As a further optimization, annular deformation relief groove 14 is further formed in the inner ring of the retaining sleeve 6. The annular deformation relief groove 14 is concentric (coaxial) with the inner ring of the retaining sleeve 6. Separation grooves 41 are formed at an end (a rear end) of the retaining sleeve 6. The separation grooves 41 separate the outer frustoconical cylinder-retaining surface 7 into a plurality of (at least two) unit surfaces 43. The separation grooves 41 further separate the end of the retaining sleeve 6 into a plurality of (at least two) elastic unit claws 42. The unit surfaces 43 are respectively located at outer sides of the elastic unit claws 42. The plurality of elastic unit claws 42 are arranged circumferentially (may be arranged circumferentially and uniformly). That is, the elastic unit claws 42 enclose a circle sleeved on the cylinder shaft 3. With the annular deformation relief groove 14, the elastic unit claws 42 can elastically clamp the cylinder shaft 3. When the end of the retaining sleeve 6 firmly retains the cylinder 2, the unit surfaces 43 at the outer sides of the elastic unit claws 42 interact with the cylinder 2, such that the elastic unit claws 42 deform toward the cylinder shaft 3 (i.e., contract toward the cylinder shaft 3 for deformation). When the retaining sleeve 6 axially retains the cylinder 2, the retaining sleeve 6 not only can firmly retain the cylinder 2, but also can clamp the cylinder shaft 3 through contraction and deformation of the elastic unit claws 42. Therefore, the cylinder 2 is fixed more firmly and is not loosened easily.

The separation grooves 41 are arranged circumferentially on the retaining sleeve 6. The separation grooves 41 are even arranged circumferentially and equidistantly, to achieve more uniform force distribution.

For example, the retaining sleeve 6 is connected to an inner threaded hole. An external thread is disposed on the cylinder shaft 3. The inner threaded hole of the retaining sleeve 6 is threaded with the external thread of the cylinder shaft 3. The retaining sleeve 6 can be threaded with the cylinder shaft 3 through threaded fit.

Also for example, the cylinder retaining component 5 further includes rotary connecting component 15 (such as a nut). The retaining sleeve 6 is connected to the rotary connecting component 15. The rotary connecting component 15 is provided with an inner threaded hole. An external thread is disposed on the cylinder shaft 3. The inner threaded hole of the rotary connecting component 15 is threaded with the external thread of the cylinder shaft 3 (threaded rotary connecting structure 40). The rotary connecting component 15 is threaded with the cylinder shaft 3 through threaded fit. The retaining sleeve 6 is driven by the rotary connecting component 15 to move axially. The rotary connecting component 15 and the retaining sleeve 6 are integrally formed. As the rotary connecting component 15 rotates, the retaining sleeve 6 rotates synchronously. The retaining sleeve 6 and the cylinder 2 rotate and rub to each other to increase the resistance, and scratch to each other to affect long-term use of the conical surface. Alternatively, the rotary connecting component 15 and the retaining sleeve 6 are split and are respectively provided with inner annular hook 16 and outer annular hook 17 that are connected to each other (for example, a snap-fit connection structure is formed. Gaps 56, 57 may be respectively formed in the inner annular hook 16 and the outer annular hook 17 to separate an annular structure into different units 66, 67, such that the inner annular hook 16 and the outer annular hook 17 deform more easily for snap-fit connection). Therefore, the rotary component can rotate relatively on the cylinder shaft 3, while the retaining sleeve 6 does not rotate relative to the cylinder shaft 3. Furthermore, the retaining sleeve 6 can be driven by the rotary component to move axially on the cylinder shaft 3. For example, the outer annular hook 17 is disposed on the rotary connecting component 15, and the inner annular hook 16 is disposed on the retaining sleeve 6. The outer annular hook 17 is disposed at an outer ring of the inner annular hook. A chamfer may be provided at an end of the inner annular hook 16 to facilitate expansion of the outer annular hook 17 for sleeved connection.

In addition, the plate cylinder apparatus of a printing device supports two assembly methods for the cylinder (may be dual-purpose). It not only can be adapted to two-end-locating (conical) plate cylinder with reliable location and high precision, but also can adapt to the plate cylinder with an inflatable inner ring. Therefore, the plate cylinder is replaced conveniently and quickly.

First method: The cylinder 2 includes plate cylinder 21. The plate cylinder 21 is sleeved on the cylinder shaft 3. The plate cylinder 21 is fixed on the cylinder shaft 3 with the cylinder fixing mechanism. Relevant air circuit structures are reserved.

Second method: The cylinder 2 includes bridge cylinder 22. The bridge cylinder 22 is sleeved on the cylinder shaft 3. The bridge cylinder 22 is fixed on the cylinder shaft 3 with the cylinder fixing mechanism. Plate cylinder 21 is then sleeved on the bridge cylinder 22. Air passage 31 is provided in the cylinder shaft 3. Air outlet 32 is formed in a circumferential surface of the cylinder shaft 3. The air outlet 32 communicates with the air passage 31. After an air source is connected, air blowing can be realized on the circumferential surface. Via hole 23 communicating with the air outlet 32 is formed in the bridge cylinder 22. In cooperation with the via hole 23 in the bridge cylinder 22 for the air blowing, an inner ring (elastic) of the plate cylinder 21 can be expanded. After the expanded inner ring of the plate cylinder 21 moves axially on the bridge cylinder 22 in place, the air source is cut off, and thus the inner ring (elastic) of the plate cylinder 21 contracts to clamp the bridge cylinder 22 for assembly. The cylinder retaining component 5 is located within an outer diameter range of a cylindrical surface of the bridge cylinder 22. The cylinder retaining component 5 can move away, such that the plate cylinder 21 is axially sleeved. Annular recess 24 is formed in an inner hole (i.e., an inner circumferential wall) of the bridge cylinder 22. The via hole 23 communicates with the air outlet 32 through the annular recess 24. When the bridge cylinder 22 is fixed on the cylinder shaft 3, the annular recess 24 forms an air chamber to facilitate connection for the via hole 23 and the air outlet 32. The via hole 23 and the air outlet 32 are formed conveniently, and the air passage 31 is also formed conveniently. The air passage 31 does not need to penetrate through the whole cylinder shaft 3. In addition, a sealing ring is disposed between each of two ends of the bridge cylinder 22 and the cylinder shaft 3. Alternatively, sealing ring 25 is disposed between a rear end of the bridge cylinder 22 and the cylinder shaft 3, and sealing rings 26, 27 are respectively disposed between the retaining sleeve 6 and the bridge cylinder 22, and between the retaining sleeve 6 and the cylinder shaft 3. With corresponding sealing rings, air leakage is prevented, and the structure is more reasonable. When the air (source) is charged, the efficiency is higher. In addition, air connecting hole 33 (which may be provided with air connecting tube 36) is formed in the support frame 60. The air connecting hole 33 communicates with air-intake annular groove 34 in the support frame 60 (a mounting hole). Air inlet 35 connected to the air passage 31 is further formed in the cylinder shaft 3. During rotation of the cylinder shaft 3, the air inlet 35 remains connected to the air-intake annular groove 34. When the plate cylinder 21 is assembled with the first method, the reserved relevant air circuit structures are in an idle state.

## Claims

1. A plate cylinder apparatus of a printing device, comprising: a cylinder fixing mechanism and a cylinder shaft (3) configured to allow a cylinder (2) to be sleeved on, wherein
the cylinder fixing mechanism comprises a cylinder abutment limiting part (4) and a cylinder retaining component (5);
the cylinder abutment limiting part (4) is located on the cylinder shaft (3); and the cylinder abutment limiting part (4) is an outer frustoconical limiting surface (9);
the cylinder retaining component (5) is disposed on and connected to the cylinder shaft (3); the cylinder retaining component (5) comprises a retaining sleeve (6); an inner ring of the retaining sleeve (6) is sleeved on the cylinder shaft (3); and the retaining sleeve (6) is provided with an outer frustoconical cylinder-retaining surface (7);
the cylinder retaining component (5) is disposed in front of the cylinder abutment limiting part (4); and
the cylinder shaft (3) is provided with a cylinder mounting position; and the cylinder mounting position is disposed between the cylinder retaining component (5) and the cylinder abutment limiting part (4).

2. The plate cylinder apparatus of a printing device according to claim 1, wherein a rear end of the cylinder (2) abuts against the outer frustoconical limiting surface (9); the rear end of the cylinder (2) is provided with a first inner frustoconical surface (10); and the first inner frustoconical surface (10) corresponds to the outer frustoconical limiting surface (9); and
a front end of the cylinder (2) is provided with a second inner frustoconical surface (11); and the outer frustoconical cylinder-retaining surface (7) corresponds to the second inner frustoconical surface (11).

3. The plate cylinder apparatus of a printing device according to claim 1, wherein a rear end of the cylinder (2) is further provided with a locating notch (12); a locating protrusion (13) is further disposed at the outer frustoconical limiting surface (9); and the locating protrusion (13) matches with and corresponds to the locating notch (12); and
the locating notch (12) is located at an inner ring of the rear end of the cylinder (2).

4. The plate cylinder apparatus of a printing device according to claim 1, wherein
an annular deformation relief groove (14) is further concentrically formed in the inner ring of the retaining sleeve (6); separation grooves (41) are formed at an end of the retaining sleeve (6); the separation grooves (41) separate the outer frustoconical cylinder-retaining surface (7) into a plurality of unit surfaces (43); the separation grooves (41) further separate the end of the retaining sleeve (6) into a plurality of elastic unit claws (42); the plurality of unit surfaces (43) are respectively located at outer sides of the plurality of elastic unit claws (42); and the plurality of elastic unit claws (42) are arranged circumferentially.

5. The plate cylinder apparatus of a printing device according to claim 4, wherein the separation grooves (41) are arranged circumferentially on the retaining sleeve (6); and the separation grooves (41) are arranged circumferentially and equidistantly.

6. The plate cylinder apparatus of a printing device according to claim 4, wherein the retaining sleeve (6) is connected to an inner threaded hole; an external thread is disposed on the cylinder shaft (3); and the inner threaded hole is threaded with the external thread.

7. The plate cylinder apparatus of a printing device according to claim 1, wherein the cylinder retaining component (5) further comprises a rotary connecting component (15); the retaining sleeve (6) is connected to the rotary connecting component (15); the rotary connecting component (15) is provided with an inner threaded hole; an external thread is disposed on the cylinder shaft (3); and the inner threaded hole is threaded with the external thread; and
the rotary connecting component (15) and the retaining sleeve (6) are integrally formed; or the rotary connecting component (15) and the retaining sleeve (6) are split and are respectively provided with an inner annular hook (16) and an outer annular hook (17) that are connected to each other.

8. The plate cylinder apparatus of a printing device according to claim 1, wherein the cylinder (2) comprises a plate cylinder (21); and the plate cylinder (21) is sleeved on the cylinder shaft (3).

9. The plate cylinder apparatus of a printing device according to claim 1, wherein the cylinder (2) comprises a bridge cylinder (22); the bridge cylinder (22) is sleeved on the cylinder shaft (3); and a plate cylinder (21) is sleeved on the bridge cylinder (22);
an air passage (31) is provided in the cylinder shaft (3); an air outlet (32) is formed in a circumferential surface of the cylinder shaft (3); the air outlet (32) communicates with the air passage (31); and a via hole (23) communicating with the air outlet (32) is formed in the bridge cylinder (22);
the cylinder retaining component (5) is located within an outer diameter range of a cylindrical surface of the bridge cylinder (22); and
an annular recess (24) is formed in an inner hole of the bridge cylinder (22); and the via hole (23) communicates with the air outlet (32) through the annular recess (24).

10. The plate cylinder apparatus of a printing device according to claim 9, wherein a sealing ring is disposed between each of two ends of the bridge cylinder (22) and the cylinder shaft (3); or,
a sealing ring is disposed between a rear end of the bridge cylinder (22) and the cylinder shaft (3), and sealing rings are respectively disposed between the retaining sleeve (6) and the bridge cylinder (22), and between the retaining sleeve (6) and the cylinder shaft (3).
